# EUROPÄISCHE PATENTSCHRIFT

(11) **EP 3 013 768 B1**
(45) Veröffentlichungstag und Bekanntmachung des Hinweises auf die Patenterteilung: **20.09.2017**
(21) Anmeldenummer: 14732888.4
(22) Anmeldetag: 26.06.2014
(51) Int. Cl.: C04B 28/14, C04B 40/00, C04B 111/27

(54) **VERFAHREN ZUR HERSTELLUNG EINER GIPSFASERPLATTE**
METHOD FOR PRODUCING A GYPSUM FIBREBOARD PANEL
PROCÉDÉ DE FABRICATION DÝUNE PLAQUE DE PLÂTRE ARMÉE DE FIBRES

(30) Priorität: 26.06.2013 EP 13173809
(43) Veröffentlichungstag der Anmeldung: 04.05.2016
(73) Patentinhaber: Knauf Gips KG, 97346 Iphofen (DE)
(72) Erfinder: SCHELLER, Lothar, 97267 Himmelstadt (DE); BURCZECK, Jürgen, 97340 Segnitz (DE); IVANOVA-TSANEVA, Vanya Stancheva, 3700 Vidin (BG); TSVETANOV, Vladimir Stefanov, 3700 Vidin (BG)
(74) Vertreter: dompatent von Kreisler Selting Werner - Partnerschaft von Patent- und Rechtsanwälten mbB
(86) Internationale Anmeldenummer: PCT/EP2014/063506
(87) Internationale Veröffentlichungsnummer: WO 2014/207098

(56) Entgegenhaltungen:
- EP-A1- 0 153 588
- EP-A1- 1 236 566
- EP-A2- 2 418 184
- CH-A- 505 674
- DE-A1- 1 571 466
- DE-B- 1 165 540
- US-A- 5 531 946

## Beschreibung

Gegenstand der vorliegenden Erfindung ist ein Verfahren zur Herstellung einer hydrophobierten Gipsfaserplatte.

Hydrophobierte Gipsfaserplatten sind Gipsfaserplatten mit einer verminderten Wasseraufnahmefähigkeit. Für eine Erfüllung der Norm EN 15283-2, Typ GFH, darf bei einer zweistündigen Wasserlagerung bei 23° die Massenzunahme der Platte 5 Gew.-% nicht überschreiten. Solche Platten werden beispielsweise im Feuchträumen wie Badezimmern, hinterlüfteten Fassadensystemen und als Fassadenplatten eingesetzt.

Eine Variante zur Herstellung hydrophobierter Gipsfaserplatten ist es, die auf üblichem Wege hergestellten Gipsfaserplatten nachträglich zu hydrophobieren. Da bei dieser Variante der Plattenkern nicht hydrophobiert ist, kann sich bei Verletzungen der Plattenoberfläche sowie an den entstandenen Sägerändern bei der Verarbeitung eine erhöhte Wasseraufnahme der Platte ergeben.

Eine weitere Variante zur Herstellung ist, ein pulverförmiges Hydrophobierungsmittel in die trockene Gipsfasermischung mit einzumischen. Hier ist die homogene Verteilung des Hydrophobierungsmittels nicht gewährleistet.

EP 2 418 184 A2 betrifft ein Verfahren zur Herstellung von α-Calciumsulfat-Halbhydrat, bei dem einer Gipssuspension unter anderem Hydrophobierungsmittel zugegeben werden können.

DE 15 71 466 A1 betrifft ein Verfahren und eine Einrichtung zur Herstellung von Platten und Formkörpern aus Gips, dabei können hydrophobierende Zusätze zugesetzt werden.

CH 505 674 A beschreibt ein Verfahren zum kontinuierlichen Herstellen beispielsweise von Gipsplatten, bei denen dem Abbindewasser Zuschlagsstoffe zugemischt werden können.

US 5,531,946 A beschreibt ein Verfahren zur Herstellung von Gipsplatten, bei dem Additive zugesetzt werden können.

EP 0 153 588 A1 beschreibt ein Verfahren zur kontinuierlichen Erstellung von Formkörpern, insbesondere Gipsplatten, bei denen Additive enthalten sein können.

DE 11 65 540 B betrifft ein Verfahren zur Herstellung von Faservliesbahnen, insbesondere aus Glasfasern, bei dem Zusatzstoffe beigefügt werden können.

EP 1 236 566 A1 betrifft einen wasserabweisenden Mehrschichtwerkstoff für Außenanwendungen, bei dem unter anderem feste Stoffe zur Hydrophobierung eingesetzt werden können.

Aufgabe der vorliegenden Erfindung war es, ein alternatives Verfahren zur Herstellung einer hydrophobierten Gipsfaserplatte zur Verfügung stellen.

Gelöst wird die Aufgabe durch ein Verfahren zur Herstellung einer hydrophierten Gipsfaserplatte im Trocken- oder Halbtrockenverfahren umfassend die Schritte
- Bereitstellen von Stuckgips
- Bereitstellen von Fasern
- Einbringen des Stuckgipses zusammen mit Fasern in einen Hauptmischer
- Aufstreuen der Mischung aus Stuckgips und Fasern auf ein bewegtes Siebband
- Befeuchtung der Mischung von Stuckgips und Fasern mit Befeuchtungswasser
- Pressen der angefeuchteten Mischung, um einen Gipsfaserplattenstrang zu erhalten,
dadurch gekennzeichnet, dass zumindest der Stuckgips mit einem Hydrophobierungsmittel in flüssiger Form versetzt wird.

Stuckgipse im Sinne dieser Anmeldung sind Formen von Calciumsulfat-Halbhydrat, die der ungefähren Formel CaSO₄ x ½ H₂O entsprechen, die unter Zusatz von Wasser zu Gips - Calciumsulfat-Dihydrat - abbinden.

Als Stuckgips hat sich insbesondere Stuckgips bewährt, der eine Korngröße von 0,001 mm bis 3 mm aufweist. Bevorzugt liegt der Anteil des Stuckgipses, der in diesem Korngrößenbereich liegt, bei mindestens 50 Gew.-% des Stuckgipses, mehr bevorzugt bei 70 Gew.-%, noch mehr bevorzugt bei 90 Gew.-%. Bevorzugt liegt die Korngröße von mindestens 80 Gew.-% des Stuckgipsanteils bei < 2 mm oder < 1 mm oder < 100 µm. Entsprechende Korngrößen können in einfacher Weise aus Sieblinien erhalten werden.

Erfindungsgemäß wird zumindest der Stuckgips mit einem Hydrophobierungsmittel in flüssiger Form versetzt.

In einer Ausführungsform der Erfindung wird dazu der Stuckgips in einem Vormischer mit dem Hydrophobierungsmittel versetzt.

In einer anderen Ausführungsform wird der Stuckgips zusammen mit den Fasern im Hauptmischer mit dem Hydrophobierungsmittel versetzt.

In einer weiteren Ausführungsform werden zunächst Stuckgips und Fasern in einem Hauptmischer miteinander vermischt und der Zusatz des Hydrophobierungsmittels erfolgt dann in einem Nachmischer.

Das Einbringen des Hydrophobierungsmittels erfolgt dabei bevorzugt durch ein Eindüsverfahren, d.h. das Hydrophobierungsmittel wird mit Druck durch eine oder mehrere Düsen von bevorzugt 0,5 - 3,0 mm Durchmesser gepresst. Alternativ kann das Einbringen auch durch Einsprühen oder dergleichen erfolgen.

Als Fasern im Sinne dieser Anmeldung kommen insbesondere Cellulosefasern und künstliche Mineralfasern in Frage. Geeignete Cellulosefasern können in besonders einfacher Weise aus Papier- und Kartonnageresten erhalten werden.

Als künstliche Mineralfasern kommen insbesondere glasartige Fasern, sogenannte Textilglasfasern oder Wollen in Frage. Insbesondere sind Mineralfasern auf Basis von Stein- und /oder Glaswollen geeignet.

Grundsätzlich können auch organische Synthesefasern, Naturfasern, Metallfasern etc. eingesetzt werden.

Als Fasern sind Größen im Bereich von 0,001 mmm bis 2 mm besonders geeignet. Bevorzugt liegen mindestens 50 Gew.-% des Faseranteils in diesem Bereich, mehr bevorzugt 70 Gew.-%, noch mehr bevorzugt 90 Gew.-% des Faseranteils innerhalb der beanspruchten Grenzen.

Auch Mischungen verschiedener Fasern können eingesetzt werden.

Bevorzugte Mischer, die als Vor-, Haupt- oder Nachmischer eingesetzt werden, sind Durchlaufmischer. Parallel zur waagerechten Mischerwelle wird das Mischgut durch die an der Mischerwelle angebrachten Mischwerkzeuge vermischt und dann weiter transportiert. Bevorzugt weist der Mischer eine Dosiereinrichtung auf, mit der Wasser und/oder Hydrophobierungsmittel dosiert werden können.

In einer bevorzugten Ausführungsform wird der Stuckgips - ggf. zusammen mit den Fasern - bevor er auf das bewegte Siebband kommt, mit relativ geringen Mengen Wasser versetzt. Dies dient insbesondere der Behandlung von Anhydrit III Gehalten, die in Stuckgips anzutreffen sind. Der Stuckgips ist nach dieser Behandlung immer noch "trocken" und verklebt nicht. Das Wasser wird in diesem Fall chemisch gebunden. Das Einbringen des Wassers erfolgt dabei bevorzugt durch Eindüsen.

Bevorzugt erfolgt das Einbringen des Anhydritwassers im Vor- oder Nachmischer.

In bevorzugten Ausführungsformen der Erfindung wird das Hydrophobierungsmittel zusammen mit dem Wasser, das zur Behandlung des Anhydrit III-Gehaltes eingesetzt wird, zugesetzt.

Eine bevorzugte Ausführungsform der Erfindung ist ein Verfahren, bei dem eine Anhydrit III-Behandlung im Vormischer stattfindet und gleichzeitig ein Hydrophobierungsmittel eingebracht wird. In einer anderen bevorzugten Ausführungsform wird das Hydrophobierungsmittel zusammen mit Wasser zur Anhydrit III-Behandlung im Nachmischer eingebracht.

Die Trockenmischung aus Fasern und ggf. behandeltem Stuckgips wird anschließend auf ein bewegtes Siebband gestreut. Auf dem Siebband erfolgt eine Befeuchtung der Mischung von Stuckgips und Fasern mit weiterem Wasser, das als Befeuchtungswasser bezeichnet wird. Dies ist gefolgt von einem Pressen der angefeuchteten Mischung, um einen Gipsfaserplattenstrang zu erhalten.

Durch das Pressen wird ein Teil des Wassers bereits aus dem Gips-/Fasergemisch entfernt. Auf der einen Seite ist es notwendig, die Menge an Befeuchtungswasser so groß zu wählen, dass eine vollständige Durchfeuchtung des Gips/Fasergemisches gewährleistet ist. Auf der anderen Seite ist es wünschenswert, die Menge an Befeuchtungswasser so klein wie möglich zu halten, um eine zügige Trocknung der Platte zu erreichen.

Typischerweise wird die vollständige Durchfeuchtung erst während des Pressens erreicht, weil das Wasser durch das Gipsfasergemisch gepresst wird und durch das Siebband nach unten austritt.

Der Gipsfaserplattenstrang wird anschließend geschnitten und getrocknet. Nach dem Oberflächenschliff und dem Fräsen der gewünschten Kanten können die Platten ggf. imprägniert und palettiert werden.

Erfindungsgemäß kann das flüssige Hydrophobierungsmittel ohne weitere Hilfsstoffe auf den Stuckgips oder die Mischung aus Stuckgips und Fasern gegeben werden. Bevorzugt wird jedoch, dass es dem Wasser in der Anhydrit III-Behandlung oder dem Befeuchtungswasser oder ggf. beiden zugesetzt wird.

Besonders bevorzugt sind Ausführungsformen, in denen zumindest auch dem Wasser zur Anhydritbehandlung Hydrophobierungsmittel zugesetzt sind. Obwohl die dort zugegebenen Mengen an Wasser relativ gering sind, kann überraschenderweise erreicht werden, dass das Hydrophobierungsmittel sich weitestgehend gleichmäßig im Stuckgips verteilt und so eine durchgehende Hydrophobierung der Platte erreicht wird.

Als Verhältnis von Fasern zu Stuckgips haben sich Mengen von 0,1 bis 0,3 Gewichtsteil Fasern pro Gewichtsteil Stuckgips als besonders geeignet erwiesen.

Für eine Anhydritbehandlung haben sich Mengen von 0,005 bis 0,1 kg Wasser pro kg Stuckgips als besonders geeignet erwiesen, mehr bevorzugt ist der Bereich von 0,01 bis 0,05.

Bezüglich der Menge des Befeuchtungswassers sind üblicherweise 0,6 bis 1 kg Befeuchtungswasser pro kg der Mischung aus Stuckgips und Fasern geeignet.

Als Hydrophobierungsmittel können grundsätzlich Hydrophobierungsmittel eingesetzt werden, die bereits zur Behandlung von Gipsplatten eingesetzt wurden. Insbesondere handelt es sich dabei um organische Siliziumverbindungen, insbesondere Silikonate und Polysiloxane. Beispiele hierfür sind die kommerziell erhältlichen Kaliummethylsilikonatlösungen oder Methylhydrogenpolysiloxane. Auch Mischungen von Hydrophobierungsmitteln sind möglich.

Flüssig bedeutet, dass es sich um einen Stoff handelt, der einer Formänderung einen kleinen, einer Volumenänderung hingegen einen großen Widerstand entgegensetzt. Wichtig ist, dass beim Temperatureinsatzbereich das Hydrophobierungsmittel flüssig ist. Typische Einsatzbereiche für das Aufbringen des Hydrophobierungsmittels liegen zwischen 10 und 40°C. Bevorzugt liegt die Einsatztemperatur zwischen 15 und 30°C.

Bevorzugt liegt die Viskosität des flüssigen Hydrophobierungsmittels im Bereich von 0,5 bis 2000 mPas bei der Einsatztemperatur.

Zum Einbringen des flüssigen Hydrophobierungsmittels - allein oder mit dem Anhydritbehandlungswasser eingebracht - wird das Eindüsen bevorzugt. Beim Einbringen zusammen mit dem Befeuchtungswasser genügt auf Grund der großen Menge des Wassers ein Einmischen.

Es ist in einigen Ausführungsformen bevorzugt, dass zunächst aus den Hydrophobierungsmitteln Suspensionen oder Emulsionen hergestellt werden, die dann mit dem Wasser für den Durchlaufmischer oder Befeuchtungswasser kombiniert wird.

Als Menge an Hydrophobierungsmitteln haben sich 0,002 bis 0,015 kg pro kg der Mischung aus Stuckgips und Fasern als geeignet erwiesen, dabei wird bei dieser Berechnung das ggf. im Hydrophobierungsmittel enthaltene Wasser, beispielsweise bei Einsatz einer Suspension oder Emulsion, nicht mit eingerechnet.

Es ist dem Fachmann geläufig, dass bei der Herstellung von Gipsfaserplatten neben den Inhaltsstoffen Stuckgips, Fasern und Hydrophobierungsmittel, weitere übliche Hilfsmittel, insbesondere Abbindebeschleuniger, Abbindeverzögerer, Detergenzien, Farbstoffe enthalten sein können.

Gegenstand der Erfindung ist auch eine Gipsfaserplatte, die durch das erfindungsgemäße Verfahren erhältlich ist. Sie unterscheidet sich von Gipsfaserplatten, bei denen eine Oberflächenimprägnierung erfolgt, insbesondere dadurch, dass die komplette Platte hydrophobiert ist. Bevorzugt erfüllt eine solche Gipsfaserplatte die Typisierung GF-H nach EN 15283-2.

Die Erfindung wird durch die nachfolgenden Beispiele näher erläutert.

### Beispiel

Bereitgestellt wurde ein feinteiliger Stuckgips, der auf dem 63 µm Sieb einen Massendurchgang von 85% hat.

In einem Durchlaufmischer mit einer Vorrichtung zur Wassereindüsung und Dosiereinrichtung wird der feinteilige Stuckgips zur Reduzierung des AIII-Gehalts konditioniert, wobei Wasser mit 0,03 kg pro kg Stuckgips dosiert in den Durchlaufmischer eingedüst wird.

Um die gewünschte Hydrophobierung der gesamten Gipsfaserplatte zu erreichen, wird dem Wasser zur Anhydritbehandlung flüssiges Methylhydrogenpolysiloxan in einer Menge von 0,01 kg pro kg Stuckgips zugesetzt.

Cellulosefasern wurden aus Altpapier gewonnen und wurden so aufbereitet, dass 40% der Fasern kleiner 90 µm waren.

In einem Hauptmischer wurden 100 kg des feinteiligen, vorbehandelten Stuckgipses mit 18 kg Cellulosefasern innig vermischt.

Das so erhaltene trockene Gips-Fasergemisch wurde gleichmäßig auf das bewegte Siebband aufgestreut.

Auf dem Siebband erfolgte die Befeuchtung des Gemisches mit Befeuchtungswasser im Verhältnis 1 zu 0,8.

In der Pressenstraße wurde das befeuchtete Gips-Fasergemisch auf die gewünschte Plattendicke gepresst. Bei diesem Vorgang wurde das Gemisch komplett durchfeuchtet und ein großer Teil des überschüssigen Wassers wurde ausgetrieben. Der so erhaltene endlose Gipsfaserplattenstrang wurde mittels Wasserschnitt auf das gewünschte Plattenformat gebracht.

Auf dem Abbindeband wurden die noch feuchten Gipsfaserplatten zu einem Mehretagentrockner transportiert und hier auf eine Restfeuchte von <1% herunter getrocknet.

Nach dem Trocknen wurden die Plattenoberflächen geschliffen und es erfolgte die Ausbildung der gewünschten Kanten.

Zum Schluss wurden die Gipsfaserplatten palettiert. Die Platten erfüllten die Bedingungen einer GF-H Platte.

## Patentansprüche

1. Verfahren zur Herstellung einer hydrophobierten Gipsfaserplatte umfassend die Schritte:
- Bereitstellen von Stuckgips
- Bereitstellen von Fasern
- Einbringen des Stuckgipses zusammen mit Fasern in einen Hauptmischer
- Aufstreuen der Mischung aus Stuckgips und Fasern auf ein bewegtes Siebband
- Befeuchtung der Mischung von Stuckgips und Fasern mit Befeuchtungswasser
- Pressen der angefeuchteten Mischung, um einen Gipsfaserplattenstrang zu erhalten,
**dadurch gekennzeichnet, dass** zumindest der Stuckgips mit einem Hydrophobierungsmittel in flüssiger Form versetzt wird.

2. Verfahren nach Anspruch 1, wobei der Stuckgips in einem Vormischer mit dem Hydrophobierungsmittel versetzt wird.

3. Verfahren nach Anspruch 1 oder 2, wobei der Stuckgips zusammen mit den Fasern im Hauptmischer mit dem Hydrophobierungsmittel versetzt wird.

4. Verfahren nach einem der Ansprüche 1 bis 3, wobei die Mischungen aus Stuckgips und Fasern in einem Nachmischer mit dem Hydrophobierungsmittel versetzt wird.

5. Verfahren nach einem der Ansprüche 1 bis 4, wobei zusätzlich Wasser zugesetzt wird, um Anhydrit III in Stuckgips umzuwandeln.

6. Verfahren nach Anspruch 5, wobei das Hydrophobierungsmittel zusammen mit dem Wasser eingebracht wird.

7. Verfahren nach einem der Ansprüche 1 bis 6, wobei das Hydrophobierungsmittel als Lösungen, Suspension oder Emulsion zugesetzt wird.

8. Verfahren nach einem der Ansprüche 1 bis 7, wobei 0,1 bis 0,3 Gew.-Teile Fasern pro Gew.-Teil Stuckgips bereitgestellt werden.

9. Verfahren nach einem der Ansprüche 1 bis 8, wobei die Faser Cellulosefasern, künstliche Mineralfasern oder Mischungen davon sind.

10. Verfahren nach einem der Ansprüche 1 bis 9, wobei die Menge an Befeuchtungswasser bei 0,6 bis 1,0 kg pro kg der Mischung aus Stuckgips und Fasern liegt.

11. Verfahren nach einem der Ansprüche 1 bis 10, **dadurch gekennzeichnet, dass** das Hydrophobierungsmittel eine organische Siliziumverbindung ist, insbesondere eine Kaliummethylsilikonat-Lösung oder ein Methylhydrogenpolysiloxan, das vorzugsweise in Form einer Emulsion verwendet wird.

12. Verfahren nach einem der Ansprüche 1 bis 11, **dadurch gekennzeichnet, dass** die Menge an Hydrophobierungsmittel 0,002 bis 0,015 kg pro kg der Mischung aus Stuckgips und Fasern beträgt.

13. Verfahren nach einem der Ansprüche 1 bis 12, **dadurch gekennzeichnet, dass** weitere Additive zugesetzt werden.

## Claims

1. A process for preparing a hydrophobized gypsum fiber board, comprising the steps of:
- providing plaster of Paris;
- providing fibers;
- introducing the plaster of Paris together with fibers into a main mixer;
- scattering the mixture of plaster of Paris and fibers onto a moving screen belt;
- moistening the mixture of plaster of Paris and fibers with moisturizing water;
- pressing the moistened mixture to obtain a gypsum fiber board strand;
**characterized in that** at least said plaster of Paris is admixed with a hydrophobizing agent in a liquid form.

2. The process according to claim 1, wherein said plaster of Paris is admixed with said hydrophobizing agent in a premixer.

3. The process according to claim 1 or 2, wherein said plaster of Paris is admixed with said hydrophobizing agent in the main mixer together with the fibers.

4. The process according to any of claims 1 to 3, wherein the mixtures of plaster of Paris and fibers is admixed with said hydrophobizing agent in a remixer.

5. The process according to any of claims 1 to 4, wherein water is additionally added to convert anhydrite III to plaster of Paris.

6. The process according to claim 5, wherein said hydrophobizing agent is introduced together with the water.

7. The process according to any of claims 1 to 6, wherein said hydrophobizing agent is added in the form of solutions, suspension or emulsion.

8. The process according to any of claims 1 to 7, wherein from 0.1 to 0.3% by weight fibers is provided per weight part of plaster of Paris.

9. The process according to any of claims 1 to 8, wherein said fibers are cellulose fibers, artificial mineral fibers, or mixtures thereof.

10. The process according to any of claims 1 to 9, wherein the amount of moisturizing water is about from 0.6 to 1.0 kg per kg of said mixture of plaster of Paris and fibers.

11. The process according to any of claims 1 to 10, **characterized in that** said hydrophobizing agent is an organic silicon compound, especially a potassium methylsiliconate solution, or a methylhydrogenpolysiloxane, which is preferably used in the form of an emulsion.

12. The process according to any of claims 1 to 11, **characterized in that** the amount of hydrophobizing agent is from 0.002 to 0.015 kg per kg of said mixture of plaster of Paris and fibers.

13. The process according to any of claims 1 to 12, **characterized in that** further additives are added.

## Revendications

1. Procédé destiné à la fabrication d'une plaque de plâtre renforcée de fibres rendue hydrophobe, lequel procédé comprend les phases suivantes :
- la préparation du plâtre de moulage ;
- la préparation des fibres ;
- l'introduction conjointe du plâtre de moulage et des fibres dans un malaxeur principal ;
- le versement du mélange constitué de plâtre de moulage et de fibres sur un tamis à bande en mouvement ;
- l'humidification du mélange constitué de plâtre de moulage et de fibres avec de l'eau de mouillage ;
- le pressage du mélange humide en vue d'obtenir une bande continue de plâtre renforcée de fibres,
**caractérisé en ce que** tout au moins le plâtre de moulage est mélangé sous une forme liquide avec un agent rendant hydrophobe.

2. Procédé selon la revendication 1, selon lequel le plâtre de moulage est mélangé dans un prémélangeur avec l'agent rendant hydrophobe.

3. Procédé selon la revendication 1 ou 2, selon lequel le plâtre de moulage est mélangé conjointement avec les fibres dans le malaxeur principal avec l'agent rendant hydrophobe.

4. Procédé selon l'une des revendications 1 à 3, selon lequel le mélange constitué de plâtre de moulage et de fibres est mélangé dans un post-malaxeur avec l'agent rendant hydrophobe.

5. Procédé selon l'une des revendications 1 à 4, selon lequel de l'eau est en outre ajoutée afin de transformer l'anhydrite III en plâtre de moulage.

6. Procédé selon la revendication 5, selon lequel l'agent rendant hydrophobe est introduit conjointement avec l'eau.

7. Procédé selon l'une des revendications 1 à 6, selon lequel l'agent rendant hydrophobe est ajouté sous la forme d'une solution, d'une suspension ou d'une émulsion.

8. Procédé selon l'une des revendications 1 à 7, selon lequel 0,1 à 0,3 partie en poids de fibres est préparée pour chaque partie en poids de plâtre de moulage.

9. Procédé selon l'une des revendications 1 à 8, selon lequel les fibres sont des fibres de cellulose, des fibres minérales synthétiques ou des mélanges de ceux-ci.

10. Procédé selon l'une des revendications 1 à 9, selon lequel la quantité en eau de mouillage est comprise entre 0,6 et 1,0 kg par kg de mélange constitué de plâtre de moulage et de fibres.

11. Procédé selon l'une des revendications 1 à 10, **caractérisé en ce que** l'agent rendant hydrophobe est un composé de silicium organique, en particulier une solution de méthylsiliconate de potassium ou du méthyl hydrogène polysiloxane, lequel est employé de préférence sous la forme d'une émulsion.

12. Procédé selon l'une des revendications 1 à 11, **caractérisé en ce que** la quantité de l'agent rendant hydrophobe est comprise entre 0,002 et 0,015 kg par kg de mélange constitué de plâtre de moulage et de fibres.

13. Procédé selon l'une des revendications 1 à 12, **caractérisé en ce que** d'autres additifs sont ajoutés.
